(19) Europäisches Patentamt
European Patent Office
Office européen des brevets

(11) **EP 2 808 541 B1**

(12) **EUROPEAN PATENT SPECIFICATION**

(45) Date of publication and mention
of the grant of the patent:
**30.11.2016 Bulletin 2016/48**

(51) Int Cl.:
*F03D 1/06* (2006.01)    *F03D 7/02* (2006.01)

(21) Application number: **14167925.8**

(22) Date of filing: **12.05.2014**

(54) **Wind turbine blade having a tensile-only stiffener for passive control of flap movement**

Windturbinenschaufel mit einer Versteifung auf Zug zur passiven Steuerung einer Klappenbewegung

Pale de turbine éolienne comportant un raidisseur de traction uniquement pour commande passive de mouvement de volet

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2013 US 201313905186**

(43) Date of publication of application:
**03.12.2014 Bulletin 2014/49**

(73) Proprietor: **Siemens Aktiengesellschaft 80333 München (DE)**

(72) Inventor: **Mailly, Luis A.
Lafayette, 80026 (US)**

(56) References cited:
**WO-A1-2008/131800     WO-A2-2010/000263
WO-A2-2010/043645     GB-A- 2 485 595
US-A1- 2006 002 794     US-A1- 2012 141 274**

**Description**

FIELD OF THE INVENTION

The invention relates to a wind turbine blade having a flap or flexible trailing edge whose movement is passively controlled in response to wind-induced deformation of the airfoil. The passive control is accomplished via a tensile-only stiffener disposed in the flap or flexible trailing edge.

BACKGROUND OF THE INVENTION

Wind turbine blades are known to encounter a wide range of forces during normal operation. In response to these forces the airfoils are known to deform, and this includes a flap-wise deformation in a direction toward the support tower as well as away from the support tower. In certain circumstances the operating environment includes winds that would result in forces on the airfoil and associated deformation that exceed design limitations. To alleviate this various approaches have been taken, including active and passive control of the airfoil surface to reduce an amount of aerodynamic lift. Active control includes flaps with actuators and the like. Passive control includes flap arrangements with mechanical springs balancing aerodynamic loads as well as flexible airfoils with aeroelastic characteristics designed to change aerodynamic characteristics of the airfoil in response to the extreme wind forces. For example, certain flexible airfoils may be designed with a sweep from the base to the tip. When the winds drive the tip sufficiently the tip flexes and changes the shape of the airfoil to reduce the aerodynamic forces on the airfoil, thereby mitigating bending moments within the blade and deformation associated with the extreme winds.
Document GB2485595 discloses a tension element arranged in the trailing edge portion of the blade that increases stiffness in flap and edgewise direction. Document US20120141274 shows a passive trailing edge flap that deflects based on increasing wind speeds.
While airfoil flap-wise deformation toward the support tower has always been a concern to a certain degree, current blade technology is producing blades of such length that airfoil flap-wise deformation and tower strikes are a growing concern. As a result there remains room in the art for improvement.

BRIEF DESCRIPTION OF THE DRAWINGS

The invention is explained in the following description in view of the drawings that show:

FIG. 1 shows a cross sectional view of a prior art wind turbine blade airfoil.
FIG. 2 shows a cross sectional view of an exemplary embodiment of the wind turbine blade airfoil.
FIGS. 3-5 show perspective views of sections of an airfoil.
FIG. 6 shows an exemplary embodiment of a hinged trailing edge flap.
FIG. 7 shows another exemplary embodiment of a hinged trailing edge flap.
FIGS. 8-9 show an illustrative side view of the airfoil undergoing positive flap-wise deformation.
FIG. 10 shows an exemplary embodiment of an airfoil with a trailing edge flap.
FIGS. 11-14 show various exemplary embodiments of the trailing edge flap.

DETAILED DESCRIPTION OF THE INVENTION

The present inventor has devised a clever and unique arrangement for a trailing edge portion of a wind turbine blade airfoil that passively couples blade bending deformation resulting from wind force with trailing edge deflection to produce a desired aeroelastic effect. The arrangement allows for reduction of aerodynamic forces (reduction of lift) during positive (lee-ward, normal wind direction) load which reduces total airfoil flapwise deformation and fatigue loading. However, unlike the prior art, the arrangement does not also contribute to an increase in unwanted aerodynamic lift during negative (windward) load which tends to increase total airfoil flap-wise deformation and fatigue load amplitude. Specifically, the invention includes a stiffener disposed in the trailing edge portion that is effective in tension only. During positive load a tensile resistance of the tensile-only stiffener is coupled with (added to) an inherent tensile resistance of the trailing edge portion to change a curvature of the airfoil by deflecting the trailing edge portion toward the suction side with respect to the pressure side. This reduces airfoil chamber (i.e. flattens the curvature of the suction side) and that reduces an aerodynamic lift of the airfoil. The curvature of the airfoil is used herein to describe an overall shape of the pressure side and the suction side which can be seen in cross sections of the airfoil. Each cross section may have its own shape and each contributes to the curvature of the airfoil. The trailing edge portion may be a non-discrete end trailing end of the airfoil, or alternately it may be a discrete flap. During negative load the tensile-only stiffener offers no or negligible resistance to compression and hence does not contribute to the inherent compression resistance of the trailing edge portion. Thus, the stiffener has little or no effect on the trailing edge portion during negative load. This selective contribution of the tensile-only stiffener results in an airfoil that gains desirable aeroelastic characteristics without also gaining undesirable aeroelastic characteristics that have previously always accompanied the desirable aeroelastic characteristics.

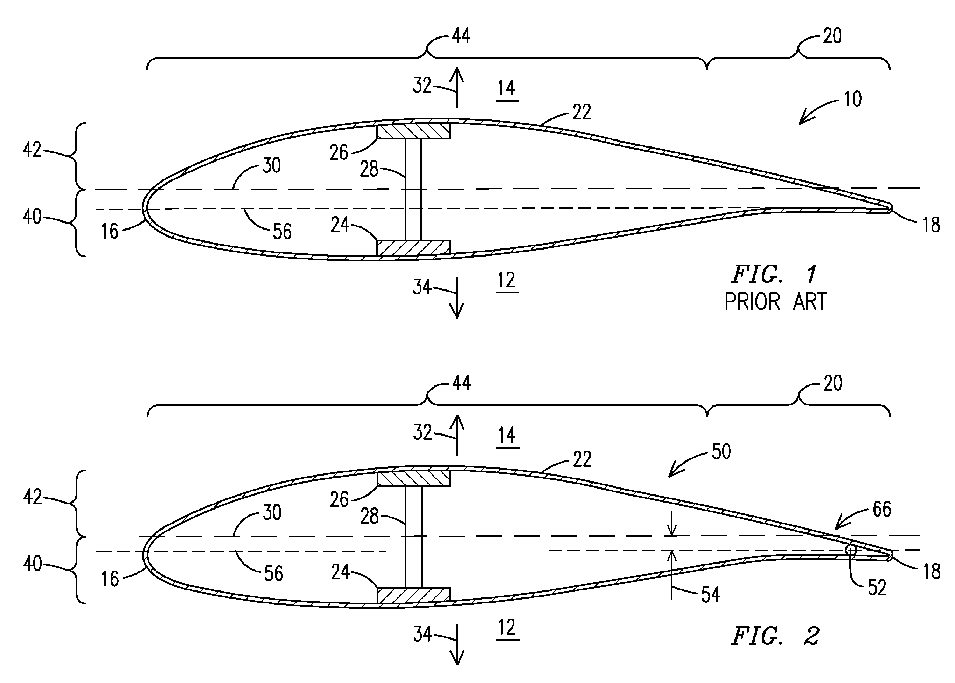

FIG. 1 shows a cross section of a prior art airfoil 10 having a pressure side 12, a suction side 14, a leading edge 16, a trailing edge 18, and a trailing edge portion 20. Within a skin 22 of the airfoil 10 is a pressure side spar cap 24, a suction side spar cap 26, and a web 28. This cross section is typical of many conventional airfoils in that there is a more convex curvature on the suction side 14 than on the pressure side 12 to generate lift through Bernoulli's principle. For a blade having such an airfoil 10 and spar caps 24, 26 located near the maximum airfoil thickness, the trailing edge 18 is consequently usually located below (towards the pressure side from) a principle bending axis, also known as an elastic axis 30. During positive airfoil flap-wise deformation 32 a first span-wise portion 40 of the airfoil 10, located on a pressure side 12 of the elastic axis 30, experiences a tensile load, and a second span-wise portion 42 of the airfoil 10, located towards the suction side 14 from the elastic axis 30, experiences a compressive load. The elastic axis remains neutral and serves as a transition between tensile load and the compressive load within the airfoil 10. The dynamic is reversed during negative airfoil flap-wise deformation 34, such that during negative airfoil flap-wise deformation 34 the first span-wise portion 40 experiences compressive load, while the second span-wise portion 42 experiences tensile load. The elastic axis 30 exists for each cross section. If each elastic axis lined up perfectly with adjacent elastic axes they may be considered to form an elastic plane (not shown). In the instance when the elastic axes do not line up perfectly they may be considered to form a neutral surface (similar to an elastic "ribbon" or "slice") of the airfoil 10. In case of non-linear elastic behavior of the main blade structure, the location of the neutral (bending-strain free) axis is not constant, but the same principles apply.

It is known that under load conventional blades having airfoils 10 with the cross section similar to that shown in FIG. 1 may react in a predictable manner during positive and negative loading. In particular, the trailing edge portion 20 of the conventional airfoil 10 may have an inherent stiffness response during tension and during compression. In the conventional airfoil 10 the trailing edge portion 20 is generally that portion toward the trailing edge 18 and there may be no distinct division between the trailing edge portion 20 and a remainder 44 of the airfoil 10, which is also a leading portion of the airfoil 10. The compressive stiffness response and the tensile stiffness response may or may not be the same as each other. In addition, the stiffness response of the trailing edge portion 20 may or may not be the same as a remainder 44 of the airfoil. During a positive airfoil flap-wise deformation 32 the trailing edge portion 20 will resist lengthening associated with the tensile loading. In this instance the trailing edge portion 20 wants to deflect toward the elastic axis 30 to accommodate. In conventional airfoils, this deflection is suppressed by the remainder of the airfoil. In airfoils with a flexible trailing edge or a hinged flap, this deflection would reduce a curvature of the suction side 14 and hence reduce aerodynamic lift and associated airfoil deformation. During negative loading 34 the trailing edge portion 20 would resist shortening associated with the compressive loading. In this instance the trailing edge portion 20 would again like to deflect toward the elastic axis 30 to accommodate, though the deflection is suppressed by the remainder of the airfoil. This would again decrease the curvature of the suction side 14, but it would increase a curvature of the pressure side 12, and this may reduce lift or create negative aerodynamic lift associated with the negative loading which is undesirable.

FIG. 2 shows a cross section of an exemplary embodiment of an airfoil 50 as disclosed herein. In addition to that shown in FIG. 1 there is a tensile-only stiffener 52 disposed in the trailing edge portion 20. The tensile-only stiffener 52 and its associated tension center (an axis along which tensile forces are modeled) are disposed at a distance 54 from the elastic axis 30 when the airfoil 10 is in a neutral position 66, which establishes a neutral position for the trailing edge 18. The airfoil neutral position 66 is a reference position and may be a position that exists when there is no wind load, or alternately a position that exists when there exists a particular operating condition/wind load etc. It may be from this airfoil neutral position 66 that curvature changes are referenced. The tensile-only stiffener 52 may operate similar to a rope in that it offers significantly greater resistance to tension than to compression while being light weight and hence minimally contributing to the airfoil mass. An example includes unimpregnated aramid rovings contained in a PTFE conduit, a rubber impregnated aramid rope directly laminated or cast into the trailing edge, or braided rope which may be advantageous if non linear effects are desired. During tension a resistance to lengthening of the tensile-only stiffener 52 (stiffener effects) would be added to an inherent resistance of the trailing edge portion 20. During compression the tensile-only stiffener 52 would simply buckle, or otherwise not contribute (or contribute negligibly) to an inherent resistance of the trailing edge portion 20 to shortening. The result is that a combined tensile stiffness response of the trailing edge portion 20 would be greater with the tensile-only stiffener 52 than without, while a combined compressive stiffness response of the trailing edge portion would be the same (or negligibly different) with or without the tensile-only stiffener 52. While a rope or rope-like component may be used to envision how the tensile-only stiffener 52 contributes, any structure may be used so long as it results in the same effects described above.

Being so disposed, should the airfoil 50 undergo a positive airfoil flap-wise deformation 32 the first span-wise portion 40 would experience tensile loading and tend to elongate from a base to a tip of the airfoil 50. Within the first span-wise portion 40, lines that are parallel to the elastic axis 30 may indicate a constant amount of tensile strain and associated elongation. For example, constant strain line 56 is a line at the given distance 54 from the elastic axis 30 along which the tensile load is constant. Within the remainder 44 of the first span-wise portion 40 the line will remain approximately straight during tensile loading. However, due to the tensile stiffness in the trailing edge portion 20 due to the tensile-only stiffener 52 disposed therein, the trailing edge portion 20 will resist tensile expansion. To minimize the amount of elastic energy used to elongate the tensile-only stiffener 52, the trailing edge portion 20 will move toward/deflect (advance toward) the elastic axis 30 relative to the remainder 44 of the first span-wise portion 40 along the constant strain line 56. This movement is within the elastic range of the trailing edge portion 20 if not hinged, and hence the trailing edge portion will not be permanently deformed. Seen from another perspective, after experiencing a positive airfoil flap-wise deformation 32, the trailing edge portion 20 would elongate less than the remainder 44 of the first span-wise portion 40 present along the constant strain line 56. Since the airfoil 50 has a flexible or hinged connection between the trailing edge portion 20 and the remainder 44 of the airfoil 50, the relatively shorter trailing edge portion 20 would seek the shortest path between its ends, or those points on the airfoil 50 where the tensile-only stiffener 52 is secured. Thus, while the remainder 44 of the first span-wise portion 40 along the constant strain line 56 would have a certain amount of arc for a given positive airfoil flap-wise deformation 32, the arc of trailing edge portion 20 would be shorter. This can occur when the trailing edge portion 20 shifts toward the elastic axis 30. This shifting will reduce a curvature of the suction side 14 and reduce positive lift. The reduction of positive lift will decrease airfoil deformation, and this will reduce the chances that the airfoil 50 will strike the support tower and will reduce blade fatigue loads.

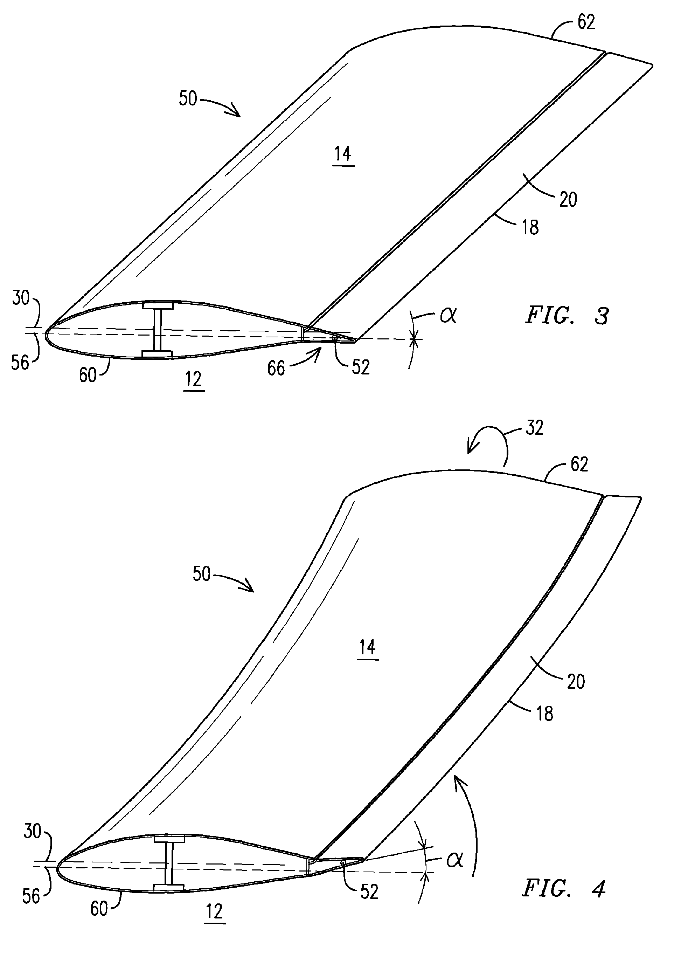

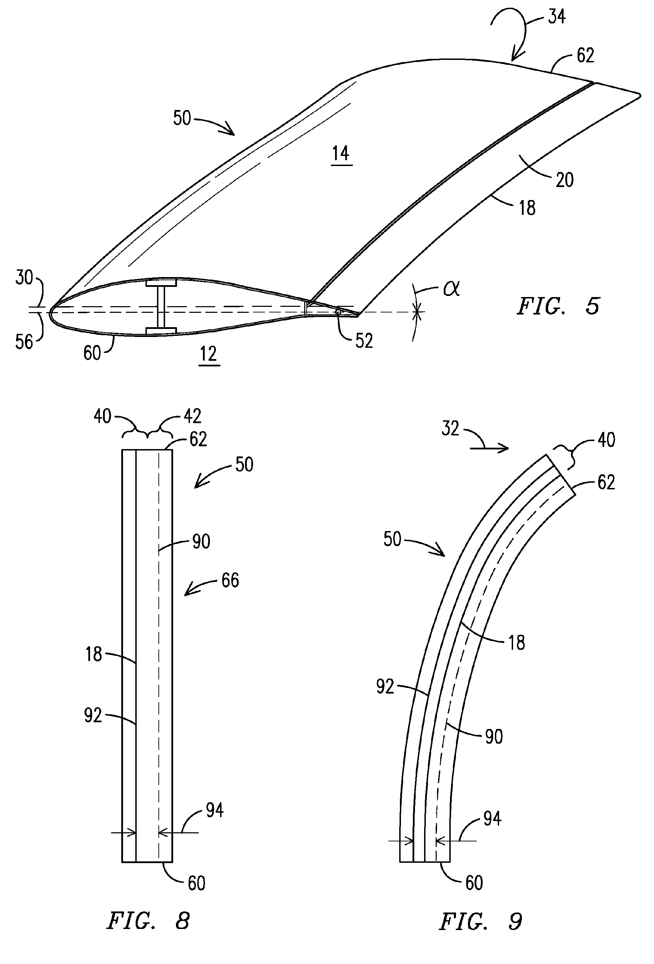

FIGS. 3-4 schematically show the effect described above. In FIG. 3 the airfoil 50 can be seen in the airfoil neutral position 66 and an angle $\alpha$ between the elastic axis and a tangent of the pressure side at the tensile-only stiffener 52 is zero. In this position the tensile-only stiffener 52 is disposed at the distance 54 from the elastic axis 30 associated with the airfoil neutral position 66 and the trailing edge neutral position. As shown in FIG. 4, during a positive airfoil flap-wise deformation 32 the airfoil deflects leeward and the trailing edge portion 20 deflects toward the suction side 14. The angle $\alpha$ between the elastic axis and a tangent of the pressure side at the tensile-only stiffener 52 becomes greater than zero and a flattening of the curvature of the suction side 14 occurs. This, in turn, reduces aerodynamic lift during positive wind conditions that cause positive airfoil flap-wise deformation 32 and mitigates positive airfoil flap-wise deformation 32. As can be seen in FIG. 5, during negative airfoil flap-wise deformation 34 the airfoil deflects windward but the trailing edge portion 20 does not deflect toward the suction side as in FIG. 4, and hence the curvature of the airfoil 50 is not altered. This is so because in this example the stiffener has not added compressive resistance to the trailing edge portion 20. Hence, the airfoil 50 acts as it would were the stiffener not present. In other words, the stiffener does not contribute to the compressive stiffness of the trailing edge portion. Any spanwise compressive stiffness of the trailing edge portion 20, exclusive of the tensile only stiffener 52, will result in a corresponding force on the trailing edge portion 20 towards the elastic axis, as described above. Consequently, should this force be sufficient to result in unwanted deflection of the trailing edge portion 20, such a compressive stiffness may be minimized, or the resulting force balanced. This may be achieved by a defined rotational stiffness of the hinge, or, as discussed later, by a preloading spring, or chordwise slots segmenting the trailing edge, or a membrane skin of the trailing edge portion 20.

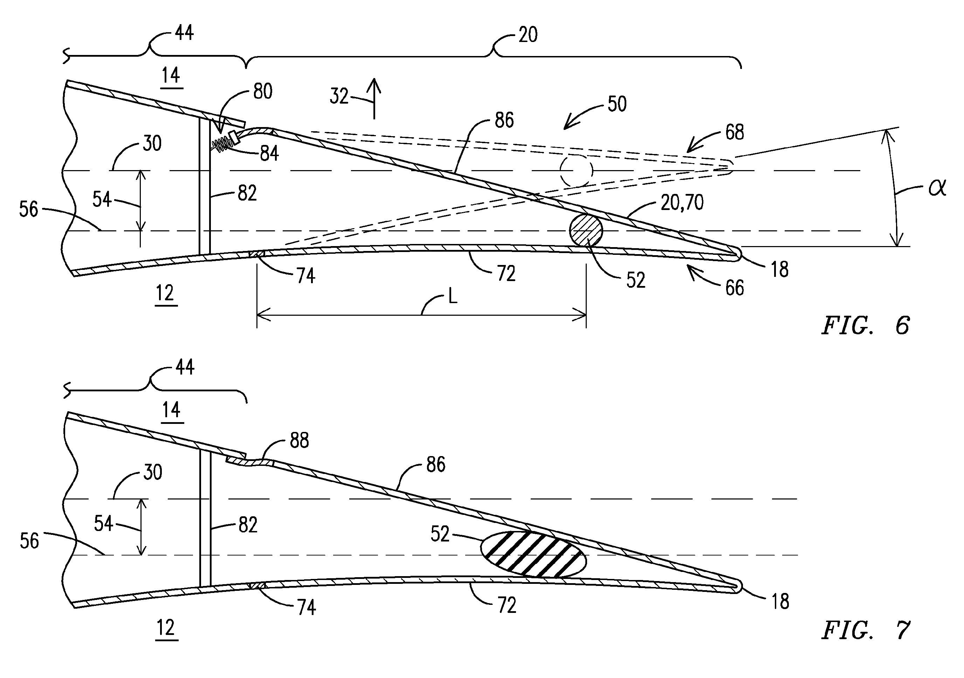

FIG. 6 shows a cross section of the trailing edge portion 20 during the positive flap-wise deformation of FIG. 4. The trailing edge portion 20 can be seen in the trailing edge neutral position (solid lines) prior to the positive airfoil flap-wise deformation 32, and in a deflected position 68 (dashed lines) resulting from advancing toward the suction side 14 relative to the remainder 44 of the pressure side 12. The trailing edge portion 20 may be a flexible trailing end that is not definitively demarked from the remainder 44 of the airfoil 50, and a portion that simply flexes as described. Alternately, the trailing edge portion 20 may be a discrete trailing edge flap 70 having a pressure side 72 secured to the remainder 44 of the airfoil 50 via a hinge 74. The hinge may be mechanical, or may simply be an area within the skin of the airfoil 50 configured to flex. For example, the hinge 74 may be a thinned laminate woven at $\pm$ 45 degrees that forms the hinge 74. The tensile-only stiffener 52 may be disposed at a distance L from the hinge 74 measured parallel to the elastic axis 30.

If the trailing edge portion 20 cannot deflect relative to the remainder 44 of the airfoil 50, the elongation of the tensile-only stiffener 52 in the trailing edge portion 20 is given by:

$$\mathcal{E}_Z = \mathcal{K}_X \cdot B$$

where $\kappa_X$ is the curvature of the airfoil along the spanwise direction, and $B$ is the distance 54 of the tensile-only stiffener 52 from the elastic axis 30 in direction of the bending radius. If the trailing edge portion 20 has a hinge 74, the equation may be expressed as:

$$\mathcal{E}_Z = \kappa_X * ( B_0 - \alpha * L )$$

where $B_0$ describes the trailing edge neutral position with respect to the elastic axis 30, $\alpha$ is the flap deflection angle, and L is the distance of the tensile-only stiffener 52 from the hinge 74 measured parallel to the elastic axis 30. Under positive flap-wise airfoil deformation 32, the trailing edge portion 20 will deflect toward the elastic axis 30 and the magnitude of the driving moment per spanwise (length of the flap can be calculated, for the example of an embedded stiffener with linear elastic response to tension, as:

$$M_{Flap} = \partial/\partial \alpha \ (1/2 * K * \mathcal{E}_Z{}^2) = \kappa_X \cdot K * ( B_0 - \alpha * L )^*L,$$

where K is the tensile stiffness of the tensile-only stiffener 52.

Also visible in FIG. 6 is a preloading spring 80 disposed between a structural member 82 of the airfoil 50 as part of a delimiting stop 84 disposed on a suction side 86 of the trailing edge portion 20. In this exemplary embodiment the trailing edge portion 20 is not secured to the suction side 14 of the remainder 44 of the second span-wise portion 42. The preloading spring is one way the trailing edge portion 20 may be preloaded such that it stays in the trailing edge neutral position until a threshold amount of deflection force (i.e. a force urging the trailing edge portion 20 from the trailing edge neutral position) is experienced. In such a configuration the curvature of the airfoil 50 may change non linearly with the amount of airfoil flap-wise deformation. In an exemplary embodiment the tip may deflect as much as 10 meters from an ideal operating sweep before mitigation of the airfoil flap-wise deformation may be desired and an associated threshold deflection force exceeded. The preloading spring 80 may have a linear or non linear stiffness. Various other ways for applying such a preloading may be implemented as known to those in the art. FIG. 7 shows an alternate exemplary embodiment of the trailing edge flap 70 where the suction side 86 of the trailing edge flap 70 is secured to the suction side of the remainder 44 of the second span-wise portion 42 via a deflection delimiter 88 which may be a sort of webbing and may also supply a preloading if desired.

As can be seen in FIGS. 8-9, which is a side view looking toward a trailing edge 18 of the airfoil 50, positive flap-wise airfoil deformation 32 results in a certain curvature of the airfoil 50. FIG. 8 shows the airfoil 50 in a same condition as shown in FIG. 3, where the airfoil 50 is not experiencing positive flap-wise deformation 32. Consequently, the airfoil 50, and the trailing edge 18 are straight from the base 60 to the tip 62. A dotted elastic edge line 90 represents an edge of the theoretical slice of the first span-wise portion 40 that includes all of the elastic axes 30 from the base 60 to the tip 62. (The elastic axes 30 are running in and out of the sheet in this view.) Likewise, a constant strain edge line 92 represents an edge of a theoretical neutral surface (slice) of the first span-wise portion 40 that includes all of the neutral position constant strain lines 56 from the base 60 to the tip 62. (The neutral position constant strain lines 56 are running in and out of the sheet in this view.) The distance 94 from the constant strain edge line 92 to the dotted elastic edge line 90 is also visible and in this exemplary embodiment may be equal to the given distance 54 from the elastic axis 30 from the base 60 to the tip 62.

In this illustrative embodiment in the airfoil neutral position 66 the trailing edge 18 essentially aligns with the constant strain edge line 92, and the dotted elastic edge line 90, the constant strain edge line 92, and the trailing edge 18 are all the same length. In contrast, FIG. 9 shows the airfoil 50 in a same condition as the airfoil 50 in FIG. 4. In FIG. 9 a length of the dotted elastic edge line 90 is the same as in FIG. 8 (neutral strain means no elongation or compression). However, in order for the curvature of FIG. 9 to exist the first span-wise portion 40 must elongate under the tensile load. Consequently, a length of the first span-wise portion 40 must increase. The increase in length increases with increased distance from the dotted elastic edge line 90. Thus, the increase in length for the constant strain edge line 92, which is at the given distance 54 from the dotted elastic edge line 90, is a quantifiable amount. Since the trailing edge 18 responds (deflects) with the trailing edge flap 70, and since the trailing edge flap 70 resists elongation more than a remainder 44 of the airfoil 50, the trailing edge flap 70 will shift toward the dotted elastic edge line 90 because the length of the dotted elastic edge line 90 has not increased (or decreased). The shorter trailing edge 18 can be envisioned as seeking a shorter distance between the base 60 and the tip 62 of the airfoil 50 because the trailing edge 18 has not elongated as much as the remainder 44 of the first span-wise portion 40 at the given distance 54. This deflection reduces the curvature of the suction side which reduces aerodynamic lift and associated flap-wise deformation.

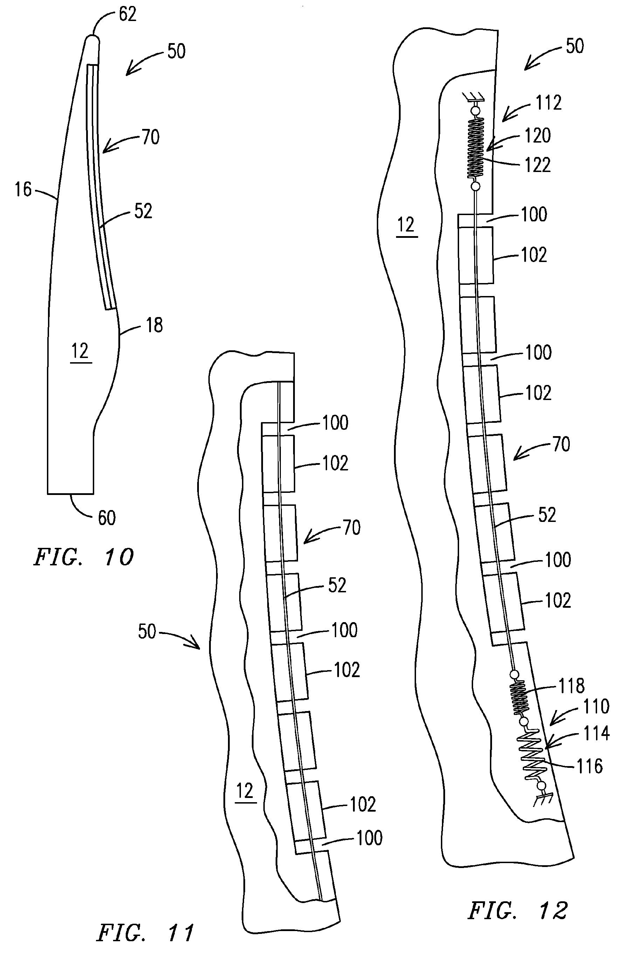

FIG. 10 is a side view of the airfoil 50 showing the trailing edge flap 70 and the tensile-only stiffener 52 disposed therein. In this exemplary embodiment the trailing edge flap 70 does not span from the base 60 to the tip 62 as it may in another exemplary embodiment. Instead, the trailing edge flap 70 spans only a portion of the length from the base 60 to the tip 62 and hence changes the curvature of the airfoil 50 in this region only. In an exemplary embodiment the portion may include from 60% to 85% of the length because this region may experience a majority of the airfoil deformation.

Consequently, placing the tensile-only stiffener 52 in this region may provide the greatest benefit.

FIG. 11 shows a close up of the trailing edge flap 70 of FIG. 10, including optional chordwise oriented gaps 100 disposed adjacent to trailing edge portion segments 102 (for example, sections of airfoil skin which are relatively structurally rigid compared to the gaps 100). These gaps 100 may be left open or the segments 102 may be joined across the gaps 100 via flexible and compressible material, for example, textile-reinforced rubber, or through a tape fixed to the surface of one segment and sliding on the surface of the adjacent segment. This would provide a continuous aerodynamic skin surface while providing compressible gaps 100 in the trailing edge flap 70 oriented transverse to compressive loads felt during airfoil deformation. These gaps 100 reduce an extensional stiffness (rigidity) of the trailing edge flap 70. During compression of the first span-wise portion 40 that is experienced during negative airfoil flap-wise deformation 34 the reduced compressive stiffness of the gaps 100 translates into a reduced compressive stiffness response of the trailing edge flap 70, and hence a greater compressibility. The greater compressibility of the trailing edge flap 70 may help the trailing edge flap 70 compress as much as the remainder 44 of the first span-wise portion 40 during negative airfoil flap-wise deformation 34, and this may help the airfoil 50 keep its aerodynamic shape (curvature) during the compression. This, in turn, further alleviates any negative lift associated with negative flap-wise deformation. This arrangement may readily be used together with the tensile-only stiffener 52 extending through each of the rigid segments to create an airfoil 50 having an increased tensional stiffness during positive airfoil flap-wise deformation 32 when compared to the airfoil without the stiffener, and a decreased compression stiffness when compared to the airfoil without the gaps 100. This yields an optimal result of mitigation of both unwanted positive flap-wise deformation and unwanted negative flap-wise deformation.

FIGS. 11-14 show various implementations of the tensile-only stiffener 52 in the trailing edge flap 70. In FIG. 11 the tensile-only stiffener 52 is secured to the blade at locations outside the trailing edge flap 70 and traverses the trailing edge flap 70, forming a continuous component spanning the segments 102 and connected to one or more of the rigid segments 102. FIG. 12 shows an exemplary embodiment of a base end mounting arrangement 110 and a tip end mounting arrangement 112 for the stiffener. The base end mounting arrangement 110 may include a base spring arrangement 114 that may include one or more base springs 116, 118. Each base spring 116, 118 may have a unique spring rate. For example, the base springs 116, 118 may be configured to provide little resistance (spring stiffener effects) until a threshold amount of tensile elongation is experienced. At that point the springs may begin to increase resistance as desired to induce tension in the tensile-only stiffener 52 and the associated desired flap deflection. This may amount to "slack" in the stiffener arrangement. Likewise, the tip end mounting arrangement 112 may include a tip spring arrangement 120 that may include a tip spring 122 that may have a linear or a non linear spring rate. The base end mounting arrangement 110 and the tip end mounting arrangement 112 may be used together or individually. Delaying the onset of the stiffener effects in this manner may be implemented alone or together with the preloading of the trailing edge flap as shown in FIG. 6.

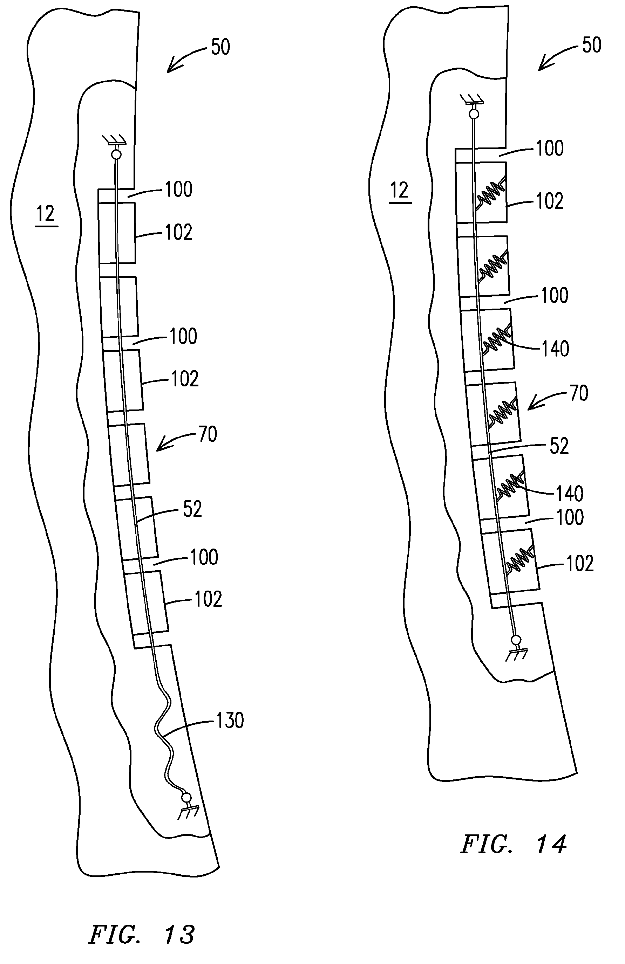

In an alternate exemplary embodiment shown in FIG. 13, the tensile-only stiffener 52 is shown having slack 130. This allows the tensile-only stiffener 52 to lengthen to accommodate an amount of positive airfoil flap-wise deformation 32, but after a threshold amount the tensile-only stiffener 52 will begin to function as detailed above. FIG. 14 shows another alternate exemplary embodiment of a stiffener arrangement where the stiffener is secured to each rigid segment 102 via a respective segment spring 140. Each segment spring may be tailored such that it has a spring rate desired for the respective rigid segment 102 to which it is secured. In this way an amount of tension in the tensile-only stiffener 52 may be transferred to each segment 102 in a manner most suited for the respective segment 102 to mitigate the amount of lengthening the trailing edge flap 70 undergoes at the respective segment 102. For example, a segment spring 140 toward the base 60 may have a higher or lower spring rate than a different segment spring 140 toward the tip 62. In this way a curvature of the airfoil 50 from the base 60 to the tip 62 can be tailored to respond differently to airfoil deformation 132 depending on its radial location from the base 60.

In another exemplary embodiment (not shown), in contrast to delaying the onset of the stiffener effects, the blade may be pre-bent leewards to initiate the onset of the stiffener effects so that stiffener effects are felt at normal operating conditions. Conversely, windward prebend is used in many upwind turbines to increase tower distance, and doing so here will result in an effect similar to providing slack as described above. Various other early-onset configurations are envisioned, as well as configurations where effects may be front-loaded (occur most at lighter loading), middle loaded, end loaded, or any combination thereof.

In light of the foregoing it can be seen that the inventor has developed a new and unique way to reduce flap-wise deformation and fatigue loading on a wind turbine blade airfoil via a tensile-only stiffener that reduces aerodynamic lift during positive loading, but contributes negligible or no effect during negative loading. The tensile-only stiffener uses materials and practices known to those in the art and hence is easy to implement and economically feasible. Consequently, the disclosure represents an improvement in the art.

While various embodiments of the present invention have been shown and described herein, it will be obvious that such embodiments are provided by way of example only. Numerous variations, changes and substitutions may be made without departing from the invention herein, so long as the stiffener is configured to add to a bending stiffness of the trailing edge portion during positive flap-wise deformation and not to add to the bending stiffness of the trailing edge portion during negative flap-wise deformation. While it has been disclosed as a tensile-only stiffener herein, it is appreciated that various other structures and materials may be used to effect the same results. Accordingly, it is intended that the invention be limited only by the scope of the appended claims.

**Claims**

1. A wind turbine blade, comprising:

    an airfoil (50) comprising a pressure side (12), a suction side (14), and a trailing edge portion (20) that is deflectable from a trailing edge neutral position; and
    a tensile-only stiffener (52) secured to the trailing edge portion (20) and comprising a tension center disposed toward the pressure side (12) of and at a distance (54) from an elastic axis (30) of the airfoil (50) when the airfoil (50) is in an airfoil neutral position (66), **characterized in that**

    during positive load (32) a tensile resistance of the tensile-only stiffener (52) is passively coupled with an inherent tensile resistance of the trailing edge portion (20) to change a curvature of the airfoil (50) by deflecting the trailing edge portion (20) toward the suction side (14) with respect to the pressure side (12), and
    during negative load (34) the tensile-only stiffener (52) offers no or negligible resistance to compression and hence does not contribute to the inherent compression resistance of the trailing edge portion (20), and
    wherein the trailing edge portion (20) further comprises chordwise oriented compressible gaps disposed between trailing edge portion segments effective to permit compression of the trailing edge portion (20) when the airfoil (50) deforms flap-wise toward the pressure side (12), and
    wherein the tensile-only stiffener (52) comprises a rope-like element oriented from a base to a tip of the airfoil (50) and a plurality of springs, each spring
    connecting the rope-like element to a respective trailing edge portion segment.

2. The wind turbine blade of claim 1, wherein the airfoil (50) is configured such that when the airfoil (50) deforms flap-wise from the airfoil neutral position (66) toward the pressure side (12) the tensile-only stiffener (52) does not contribute to a deflection of the trailing edge portion (20) toward the suction side (14).

3. The wind turbine blade of claim 1, wherein the trailing edge portion (20) is elastically deflectable with respect to a leading edge portion of the airfoil (50).

4. The wind turbine blade of claim 1, the airfoil (50) further comprising a hinge connecting the trailing edge portion (20) to a leading portion of the airfoil, wherein the trailing edge portion (20) deflects by rotating about the hinge.

5. The wind turbine blade of claim 1, wherein the tensile-only stiffener (52) comprises a non linear stiffness response.

6. The wind turbine blade of claim 1, wherein the tensile-only stiffener (52) begins to mitigate a span-wise lengthening of the trailing edge portion (20) only after a threshold amount of airfoil flap-wise deformation.

7. The wind turbine blade of claim 1, wherein during a positive loading (32) the airfoil (50) is configured such that the trailing edge portion (20) remains in the trailing edge neutral position until a threshold amount of a deflecting force is reached.

8. The wind turbine blade of claim 1, wherein during a negative loading (34) the airfoil (50) is configured such that the trailing edge portion (20) is biased into the trailing edge neutral position.

9. The wind turbine blade of claim 1, wherein a spring rate of each spring corresponds to an amount of mitigation of a span-wise lengthening of the trailing edge (18) desired at the respective segment.

10. The wind turbine blade of claim 1, wherein the tensile-only stiffener (52) mitigates a span-wise lengthening of the trailing edge portion (20) in a region of the trailing edge portion (20) from 60% to 85% of a length from a base of the airfoil (50) to a tip of the airfoil (50).

**Patentansprüche**

1. Windenergieanlagen-Rotorblatt, welches umfasst:

    ein Profilteil (50), das eine Druckseite (12), eine Saugseite (14) und einen Hinterkantenabschnitt (20), welcher aus einer Hinterkanten-Neutralposition ablenkbar ist, umfasst; und
    eine nur bei Zugbeanspruchung wirkende Versteifung (52), die an dem Hinterkantenabschnitt (20) befestigt ist und einen Spannungsmittelpunkt umfasst, der zur Druckseite (12) des Profilteils (50) hin und in einem Abstand (54) von einer elastischen Achse (30) desselben angeordnet ist, wenn sich das Profilteil (50) in einer Profilteil-Neutralposition (66) befindet, **dadurch gekennzeichnet, dass**

    während einer positiven Belastung (32) ein Zugwiderstand der nur bei Zugbeanspruchung wirkenden Versteifung (52) passiv mit einem inhärenten Zugwiderstand des Hinterkantenabschnitts (20) gekoppelt ist, um eine Krümmung des Profilteils (50) durch Ablenken des Hinterkantenabschnitts (20) zur Saugseite (14) hin bezüglich der Druckseite (12) zu ändern, und
    während einer negativen Belastung (34) die nur bei Zugbeanspruchung wirkende Versteifung (52) keinen oder einen vernachlässigbaren Widerstand gegen Druckbeanspruchung aufweist und daher nicht zu dem inhärenten Druckwiderstand des Hinterkantenabschnitts (20) beiträgt, und
    wobei der Hinterkantenabschnitt (20) ferner sehnenweise ausgerichtete zusammendrückbare Zwischenräume umfasst, die zwischen Hinterkantenabschnitts-Segmenten angeordnet sind und bewirken, dass ein Zusammendrücken des Hinterkantenabschnitts (20) ermöglicht wird, wenn sich das Profilteil (50) klappenweise zur Druckseite (12) hin verformt, und
    wobei die nur bei Zugbeanspruchung wirkende Versteifung (52) ein seilartiges Element, das von einer Basis zu einer Spitze des Profilteils (50) gerichtet ist, und mehrere Federn umfasst, wobei jede Feder das seilartige Element mit einem jeweiligen Hinterkantenabschnitts-Segment verbindet.

2. Windenergieanlagen-Rotorblatt nach Anspruch 1, wobei das Profilteil (50) derart ausgebildet ist, dass, wenn sich das Profilteil (50) klappenweise aus der Profilteil-Neutralposition (66) zur Druckseite (12) hin verformt, die nur bei Zugbeanspruchung wirkende Versteifung (52) nicht zu einer Ablenkung des Hinterkantenabschnitts (20) zur Saugseite (14) hin beiträgt.

3. Windenergieanlagen-Rotorblatt nach Anspruch 1, wobei der Hinterkantenabschnitt (20) elastisch ablenkbar bezüglich eines Vorderkantenabschnitts des Profilteils (50) ist.

4. Windenergieanlagen-Rotorblatt nach Anspruch 1, wobei das Profilteil (50) ferner ein Drehgelenk umfasst, das den Hinterkantenabschnitt (20) mit einem vorderen Abschnitt des Profilteils verbindet, wobei der Hinterkantenabschnitt (20) durch Drehen um das Drehgelenk abgelenkt wird.

5. Windenergieanlagen-Rotorblatt nach Anspruch 1, wobei die nur bei Zugbeanspruchung wirkende Versteifung (52) eine nichtlineare Steifigkeitskennlinie aufweist.

6. Windenergieanlagen-Rotorblatt nach Anspruch 1, wobei die nur bei Zugbeanspruchung wirkende Versteifung (52) erst nach einem Schwellenwertbetrag der klappenweisen Verformung des Profilteils beginnt, eine Verlängerung des Hinterkantenabschnitts (20) in der Spannweitenrichtung abzuschwächen.

7. Windenergieanlagen-Rotorblatt nach Anspruch 1, wobei während einer positiven Belastung (32) das Profilteil (50) derart gestaltet ist, dass der Hinterkantenabschnitt (20) in der Hinterkanten-Neutralposition verbleibt, bis ein Schwellenwertbetrag einer Ablenkkraft erreicht ist.

8. Windenergieanlagen-Rotorblatt nach Anspruch 1, wobei während einer negativen Belastung (34) das Profilteil (50) derart gestaltet ist, dass der Hinterkantenabschnitt (20) in die Hinterkanten-Neutralposition vorgespannt ist.

9. Windenergieanlagen-Rotorblatt nach Anspruch 1, wobei eine Federkonstante jeder Feder einem Betrag der Abschwächung einer Verlängerung der Hinterkante (18) in der Spannweitenrichtung entspricht, die an dem jeweiligen Segment gewünscht wird.

10. Windenergieanlagen-Rotorblatt nach Anspruch 1, wobei die nur bei Zugbeanspruchung wirkende Versteifung (52) eine Verlängerung des Hinterkantenabschnitts (20) in der Spannweitenrichtung in einem Bereich des Hinterkantenabschnitts (20) abschwächt, der sich von 60 % bis 85 % einer Länge von einer Basis des Profilteils (50) bis zu einer Spitze des Profilteils (50) erstreckt.

**Revendications**

1.  Pale d'éolienne, comprenant :

    un profil aérodynamique (50) comprenant un côté pression (12), un côté aspiration (14), et une partie (20) de bord de fuite qui peut être déviée depuis une position neutre de bord de fuite ; et
    un raidisseur en tension uniquement (52) fixé à la partie (20) de bord de fuite et comprenant un centre de tension disposé vers le côté aspiration (14) du et à une certaine distance (54) d'un axe élastique (30) du profil aérodynamique (50) lorsque le profil aérodynamique (50) est dans une position neutre (66) de profil aérodynamique, **caractérisée en ce que** lors d'une charge positive (32), une résistance à la tension du raidisseur en tension uniquement (52) est couplée passivement avec une résistance inhérente à la tension de la partie (20) de bord de fuite pour changer une courbure du profil aérodynamique (50) en déviant la partie (20) de bord de fuite vers le côté aspiration (14) par rapport au côté pression (12), et
    lors d'une charge négative (34), le raidisseur en tension uniquement (52) offre une résistance nulle ou négligeable à la compression et ainsi ne contribue pas à la résistance inhérente à la compression de la partie (20) de bord de fuite, et
    dans laquelle la partie (20) de bord de fuite comprend en outre des espaces compressibles dans le sens de la corde disposés entre des segments de partie de bord de fuite efficaces pour permettre une compression de la partie (20) de bord de fuite lorsque le profil aérodynamique (50) se déforme comme un volet vers le côté pression (12), et
    dans laquelle le raidisseur en tension uniquement (52) comprend un élément de type corde orienté d'une base jusqu'à une extrémité du profil aérodynamique (50) et une pluralité de ressorts, chaque ressort connectant l'élément de type corde à un segment respectif de partie de bord de fuite.

2.  Pale d'éolienne selon la revendication 1, dans laquelle le profil aérodynamique (50) est configuré de telle manière que, lorsque le profil aérodynamique (50) se déforme comme un volet de la position neutre (66) de profil aérodynamique vers le côté pression (12), le raidisseur en tension uniquement (52) ne contribue pas à une déviation de la partie (20) de bord de fuite vers le côté aspiration (14).

3.  Pale d'éolienne selon la revendication 1, dans laquelle la partie (20) de bord de fuite peut être élastiquement déviée par rapport à une partie de bord d'attaque du profil aérodynamique (50).

4.  Pale d'éolienne selon la revendication 1, le profil aérodynamique (50) comprenant en outre une charnière connectant la partie (20) de bord de fuite à une partie de bord d'attaque du profil aérodynamique, dans laquelle la partie (20) de bord de fuite est déviée en tournant autour de la charnière.

5.  Pale d'éolienne selon la revendication 1, dans laquelle le raidisseur en tension uniquement (52) comprend une réponse non linéaire en rigidité.

6.  Pale d'éolienne selon la revendication 1, dans laquelle le raidisseur en tension uniquement (52) ne commence à limiter un allongement en portée de la partie (20) de bord de fuite qu'après une quantité de seuil de déformation comme un volet de profil aérodynamique.

7.  Pale d'éolienne selon la revendication 1, dans laquelle, lors d'une charge positive (32), le profil aérodynamique (50) est configuré de telle manière que la partie (20) de bord de fuite reste dans la position neutre de bord de fuite jusqu'à ce qu'une quantité de seuil d'une force de déviation soit atteinte.

8.  Pale d'éolienne selon la revendication 1, dans laquelle, lors d'une charge négative (34), le profil aérodynamique (50) est configuré de telle manière que la partie (20) de bord de fuite est poussée dans la position neutre de bord de fuite.

9.  Pale d'éolienne selon la revendication 1, dans laquelle une constante de ressort de chaque ressort correspond à une quantité de limitation d'un allongement en portée du bord de fuite (18) désiré au niveau du segment respectif.

10. Pale d'éolienne selon la revendication 1, dans laquelle le raidisseur en tension uniquement (52) limite un allongement en portée de la partie (20) de bord de fuite dans une région de la partie (20) de bord de fuite de 60% à 85% d'une longueur d'une base du profil aérodynamique (50) à une extrémité du profil aérodynamique (50).

FIG. 1
PRIOR ART

FIG. 2

EP 2 808 541 B1

62

50

14

20

18

30

56

60

12

66

52

α

*FIG. 3*

32

62

50

14

20

18

30

56

60

12

52

α

*FIG. 4*

FIG. 5

FIG. 8

FIG. 9

FIG. 6

FIG. 7

EP 2 808 541 B1

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2485595 A
- US 20120141274 A